Europäisches Patentamt

European Patent Office

Office européen des brevets

(19)

(11) **EP 0 942 294 A2**

(12) **EUROPÄISCHE PATENTANMELDUNG**

(43) Veröffentlichungstag:
**15.09.1999 Patentblatt 1999/37**

(51) Int Cl.[6]: **G01S 13/44**, G01S 7/28

(21) Anmeldenummer: **99810184.4**

(22) Anmeldetag: **04.03.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **09.03.1998 CH 56598**

(71) Anmelder: **Siemens Schweiz AG (Siemens Suisse SA) (Siemens Svizzera SA) Siemens Switzerland Ltd)**
**8047 Zürich (CH)**

(72) Erfinder: **Küpfer, Hanspeter**
**8903 Birmensdorf (CH)**

(54) **Verfahren zur Seitenkeulenunterdrückung und Amplituden- oder Phasen-Monopulsradargerät**

(57)     Das Verfahren dient zur Unterdrückung der Auswirkung von Signalen, die über Seitenzipfel einer Antenne (PA; HA) eines Amplituden- oder Phasen-Monopulsradargerätes empfangen oder gesendet werden, bei dem zur Lagevermessung eines ersten und gegebenenfalls eines zweiten vom Radarstrahl erfassten Ziels (T1, T2) für jede Messachse drei Beleuchtungsfunktionen Je(Lx), Jk(Lx) und Js(Lx) für die Antenne (PA; HA), sowie daraus resultierende Antennenfunktionen Fe(X), Fk(X) und Fs(X) vorgesehen sind. Die erste, zweite und dritte Beleuchtungsfunktion Je(Lx); Jk(Lx) und Js(Lx) sind dabei derart gewählt, dass durch Normierung der ersten und der zweiten Antennenfunktion Fe(X); Fk(X) mit der dritten Antennenfunktion Fs(X) eine von der Zielrichtung linear bzw. quadratisch abhängige Quotientenfunktion Qe(X)=Fe(X)/Fs(X) bzw. Qk(X)=Fk(X)/Fs(X) entsteht. Deren Leistung wird mit wenigstens einem entsprechend der Grösse der Hauptantennenkeule gewählten Schwellwert $th_e$ bzw. $th_k$ verglichen und bei Überschreiten des Schwellwerts $th_e$ bzw. thk wird die Auswirkung des empfangenen Signals unterdrückt. In einer vorzugsweisen Ausgestaltung der Erfindung wird vorgesehen, dass die Nullstellen der Antennenfunktionen Fe(X), Fk(X) und Fs(X) geringfügig gegeneinander verschoben sind.

Fig. 7

**Beschreibung**

Die vorliegende Erfindung betrifft ein Verfahren nach dem Oberbegriff des Patentanspruchs 1 bzw. 8.

Zur Ortung und gegebenenfalls Verfolgung von Flugobjekten werden normalerweise Monopulsradargeräte eingesetzt, wie sie u.a. in [2] beschrieben sind. Mit Monopulsradargeräten werden mit jedem empfangenen Puls in Azimut und Elevation Winkelfehlersignale erzeugt, die zu Null werden, wenn die Antennen- bzw. Boresightachse genau auf das Ziel ausgerichtet ist. Die Ausrichtung und gegebenenfalls Nachführung der Boresightachse erfolgt bei Hornantennen mechanisch. Oft wird bei Arrayantennen der Messbereich in Elevation elektronisch und in Azimut mechanisch abgetastet (siehe [3], Seiten 30 und 31).

Bekannte Amplituden- oder Phasen-Monopulsradargeräte liefern genaue Winkelmessdaten bezüglich einem Flugobjekt, solange zusätzlich zu den direkt vom überwachten Flugobjekt empfangenen Signalen, keine Signale von weiteren Objekten oder ein- oder mehrfach reflektierte Signale vom ersten oder den weiteren Objekten empfangen werden.

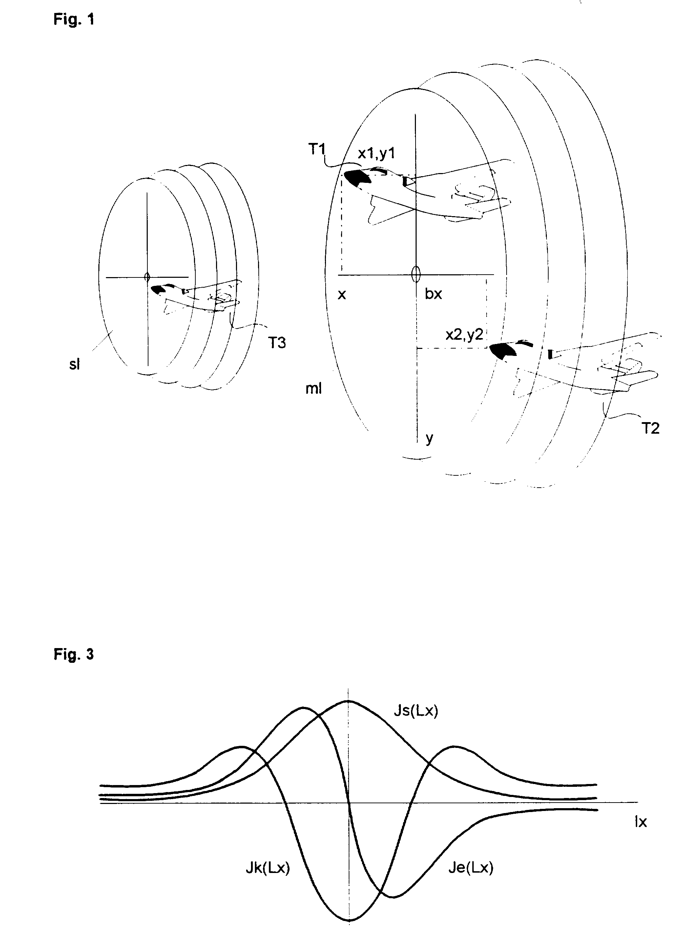

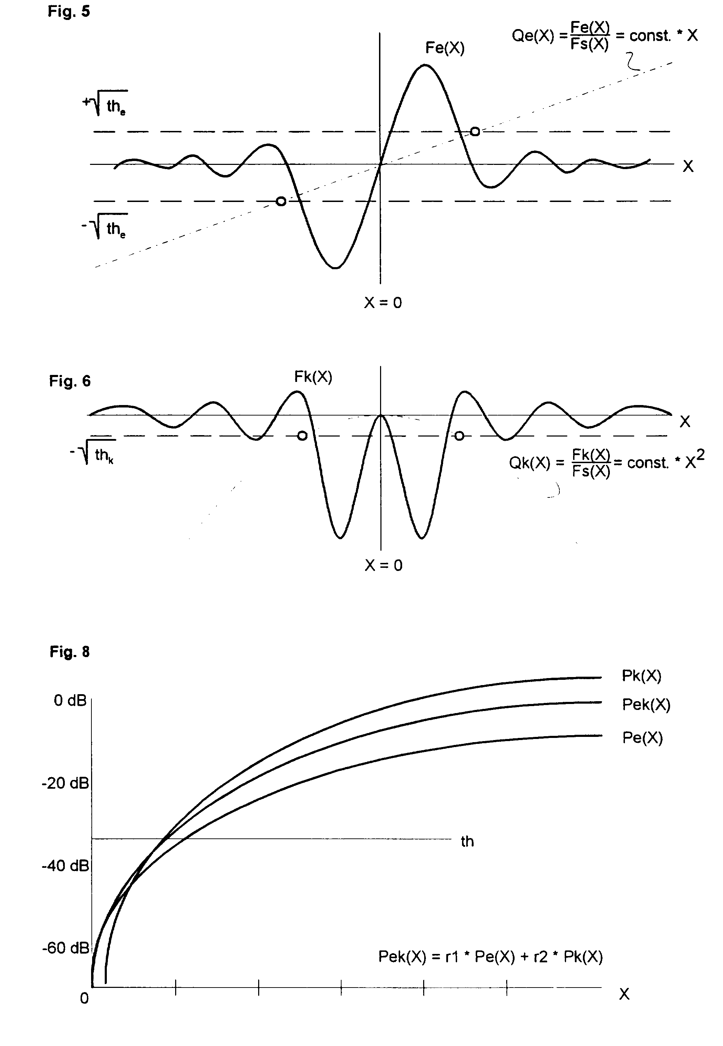

Fig. 1 zeigt zwei von der Hauptkeule ml einer Antenne erfasste Flugobjekte T1 und T2, von denen sich das erste über und das zweite unterhalb der Boresightachse bx befindet (vgl. [8], Fig. 6). Gemäss [2], Kapitel 8, Seiten 201 - 210 kann mit einem konventionellen Monopulsradargerät die räumliche Lage eines Flugobjekts nicht mehr präzise bestimmt werden, sobald sich ein zweites Flugobjekt in demselben Radarstahl befindet. Im Vergleich zum Einziel-Fall ändert sich die Phase des resultierenden Differenzsignals bezüglich dem Summensignal. Zudem liefern konventionelle Monopulsradargeräte fehlerhafte Winkelmessdaten, sofern die Ziele auch distanzmässig nicht getrennt werden können. Ein Spezialfall des Zweiziel-Falles ist die Spiegelung des von einem Flugobjekt reflektierten Radarechos z.B. auf einer Wasseroberfläche. Gezeigt ist ferner, dass ein drittes Flugobjekt T3 von einem Seitenzipfel sl der Antenne erfasst wurde, wodurch die Vermessung der ersten beiden Flugobjekte T1 und T2 beeinträchtigt wird, oder (bei fehlenden Objekten T1, T2) fälschlicherweise eine Entdeckung des Objekts T3 in der Richtung der Hauptkeule gemeldet wird.

Durch das aus [4] bekannte Verfahren werden fehlerhafte Vermessungen von über Wasser fliegenden Objekten vermieden. Obwohl das beschriebene (Crossfeed-) Verfahren gegenüber dem konventionellen Monopulsverfahren grundlegende Verbesserungen erbrachte, ist unter bestimmten Umständen auch bei diesem Verfahren mit Messfehlern zu rechnen. Die Mängel des Crossfeedverfahrens wurden durch das aus [5] bekannte Kurvaturverfahren beseitigt, bei dem für jede Messachse drei Antennenfunktionen (Summe, Differenz, Kurvatur) verwendet werden.

Weder die klassischen Monopulsverfahren, noch das Crossfeed- oder das Kurvaturverfahren erlauben, zu entscheiden, ob Einzelziele oder Doppelziele aus der Richtung der Hauptkeule ml oder über Seitenzipfel sl der Antenne empfangen wurden. Aus dem Seitenzipfelbereich sl werden zudem oft Störsignale empfangen, die die Verarbeitung der Signale der tatsächlichen Ziele beeinträchtigen. Signale aus dem Seitenzipfelbereich sind daher vorzugsweise auszublenden.

Zur Unterdrückung von aus dem Seitenzipfelbereich empfangenen Signalen werden sogenannte SLS- und sogenannte SLC-Verfahren angewendet. Durch das SLS-Verfahren (sidelobe blanking oder sidelobe suppression) wird durch eine geeignete Messmethode festgestellt, ob ein Signal aus dem Seitenzipfelbereich empfangen wurde. In Abhängigkeit vom Messresultat werden die empfangenen Signale entweder weiterverarbeitet oder vollständig unterdrückt. Im letzteren Fall geht auch der Nutzsignalanteil verloren. Demgegenüber wird mit dem SLC-Verfahren (sidelobe cancellation) durch entsprechende Formung des Antennenstrahls erreicht, dass die Antennenfunktion im Winkelbereich, in dem das Störsignal **auftritt,** eine Nullstelle aufweist. Dadurch wird das Störsignal ohne Beeinträchtigung des Nutzsignals unterdrückt.

Beim SLS-Verfahren, das z.B. in [1], Seite 29-18 oder [6], Seite 33-6 beschrieben ist, wird zusätzlich zur Hauptantenne eine omni-direktionale Hilfsantenne verwendet, die über einen grossen Winkelbereich einen annähemd konstanten, jedoch geringen Antennengewinn und in Richtung der Boresightachse der Hauptantenne vorzugsweise ein Minimum aufweist. Die Signale beider Antennen werden über getrennte Empfangsstufen einem Komparator zugeführt, der den Quotienten der von der Hilfs- und der Hauptantenne empfangenen Signalleistung bildet. Die Auswirkung des empfangenen Signals, nämlich dessen Darstellung als Radarecho auf dem Bildschirm, wird unterdrückt, sofern der Quotient eine vorgesehene Schwelle übersteigt (RSLS Verfahren). Durch eine geeignete Einstellung der Schwelle kann der Winkelbereich festgelegt werden, innerhalb dem die Signale den Seitenzipfel zugeordnet und somit unterdrückt werden. Beim ISLS Verfahren erfolgt eine Unterdrückung der Auswirkung, nämlich die Aussendung einer Transponderantwort, wenn der Transponder über Seitenzipfel einer Bodenstation abgefragt wird.

Hilfsantennen, deren Phasenzentren sich nicht mit demjenigen der Hauptantenne decken, sind gemäss [6] für RSLS- und ISLS-Verfahren nur bedingt geeignet.

Bei dem aus [5] bekannten Kurvaturverfahren kann zur zusätzlichen Durchführung des SLS-Verfahrens eine der Antennenfunktionen, die Kurvaturfunktion, zusätzlich als Hilfsfunktion verwendet werden. Durch die Forderung nach einem bestimmten Verlauf der Kurvaturfunktion entstehen jedoch Einschränkungen, die einer Optimierung des Kurvaturverfahrens entgegenwirken.

Kurvaturmonopulsradargeräte benötigten zur Anwendung des SLS-Verfahrens gemäss [7] bisher nebst den drei zur Zielvermessung vorgesehenen Antennenfunktionen (Summe, Differenz und Kurvatur) eine weitere Hilfsfunktion, wodurch ein hoher Aufwand entstand. In [8] sind konventionelle Monopulsradargeräte beschrieben, für die zur Durchführung der Strahlformung beim SLC-Verfahren für die Hauptantenne eine Hilfsfunktion gebildet wird. Dazu werden Beleuchtungsfunktionen vorgesehen, durch die die Gewichtung der Elementarsignale einer Arrayantenne als Funktion des Ortes lx auf dem Array festgelegt wird. Der Übergang von der Beleuchtungsfunktion zur entsprechenden Antennenfunktion erfolgt durch die Fouriertransformation. Durch die Bildung von Hilfsfunktionen auf der Hauptantenne kann auf die Verwendung von Hilfsantennen verzichtet werden. Die Phasenzentren der Haupt- und Hilfsfunktionen liegen ferner nahe beieinander, wodurch verschiedene in [8] beschriebene Vorteile realisiert werden. Im Gegensatz zu dem z.B. in [1] oder [6] beschriebenen SLS-Verfahren, weisen die Hilfsantennenfunktionen keine omni-direktionale Charakteristik, sondern einen hohen Antennengewinn in der Einfallsrichtung eines Störsignals auf. Die empfangenen und gewichteten Störsignale der Hilfspfade werden in einer Additionsstufe vom Signal des Hauptpfades subtrahiert, wonach letzteres von Störanteilen weitgehend befreit ist. Das in [8] beschriebene SLC-Verfahren benötigt zur Unterdrückung von Störsignalen mehrere Antennenfunktionen.

Der vorliegenden Erfindung liegt daher die Aufgabe zugrunde, das SLS-Verfahren dahingehend zu verbessern, dass für Radargeräte, die zur Zielvermessung pro Messachse drei Antennenfunktionen aufweisen, zur Erkennung von über einen Seitenzipfel empfangenen Signalen keine zusätzlichen Antennenfunktionen bzw. Hilfsantennen benötigt werden. Ferner ist ein nach dem erfindungsgemässen Verfahren arbeitendes Monopulsradargerät anzugeben.

Diese Aufgabe wird durch die im Patentanspruch 1 bzw. 9 angegebenen Massnahmen gelöst. Vorteilhafte Ausgestaltungen der Erfindung sind in weiteren Ansprüchen angegeben.

Anhand des erfindungsgemässen Verfahrens, das für Phasen- und Amplituden-Monopulsradargeräte anwendbar ist, kann mit einfachen Massnahmen festgestellt werden, ob ein Flugobjekt von der Haupt-oder einer Seitenkeule der Radarantenne erfasst wird. Insbesondere Radarsysteme, die nach dem in [5] beschriebenen Verfahren betrieben werden, sind zur Durchführung der erfindungsgemässen Massnahmen optimal geeignet, da keine zusätzlichen Hilfsantennen verwendet oder zusätzliche Hilfsfunktionen gebildet werden müssen. Bestehende Antennenfunktionen können unverändert oder, in einer vorzugsweisen Ausgestaltung der Erfindung, nur geringfügig modifiziert übernommen werden. Das Verfahren vermeidet zudem die Nachteile, die bei Hilfsantennen mit unterschiedlichen Phasenzentren auftreten (siehe [6]).

Die Erfindung wird nachfolgend anhand von Zeichnungen beispielsweise näher erläutert. Dabei zeigt:

Fig. 1 von der Hauptkeule und einem Seitenzipfel einer Antenne erfasste Flugobjekte,

Fig. 2 ein zur Vermessung von zwei Zielen geeignetes Monopulsradargerät, bei dem für jede Messachse drei Antennenfunktionen verwendet werden,

Fig. 3 drei Beleuchtungsfunktionen Je(Lx), Jk(Lx) und Js(Lx),

Fig.4 eine logarithmische Darstellung des Verlaufs unverzerrter Antennenfunktionen eines abgeleiteten Paars Fe(X), Fk(X) und von Fs(X),

Fig.5 die Darstellung des Verlaufs der normierten und nicht normierten Neigungsfunktion Qe(X)=Fe(X)/Fs(X) bzw. Fe(X),

Fig.6 die Darstellung des Verlaufs einer der normierten und nicht normierten Kurvaturfunktion Qk(X)=Fk(X)/Fs(X) bzw. Fk(X),

Fig.7 eine logarithmische Darstellung des Verlaufs mit in der Abszisse linear verzerrten Antennenfunktionen Fev(X), Fkv(X) und Fsv(X) (in Fig. 4 unverzerrt),

Fig. 8 die Darstellung der Signalleistungen Pe(X), Pk(X) der Quotientenfunktionen Qe(X), Qk(X) mit unverzerrten Antennenfunktionen Fe(X), Fk(X) und Fs(X) und deren gewichtete Summe Pek(X),

Fig. 9 die Darstellung der Signalleistung Pev(X), Pkv(X) der auf verzerrten Antennenfunktionen Fev(X), Fkv(X) und Fsv(X) basierenden Quotientenfunktionen Qev(X), Qkv(X),

Fig. 10 die Darstellung der Quotienleistungssummenfunktion Pekv(X) der Signalleistungen Pev(X), Pkv(X) aus Fig. 9,

Fig. 11 eine zur Bildung und Überwachung der Signalleistungen Pe(X), Pk(X) dienende Schaltungsanordnung,

Fig. 12 eine erste zur Bildung und Überwachung der Quotientenleistungssummenfunktion Pek(X) dienende Schaltungsanordnung,

Fig. 13 eine zweite zur (vektoriellen) Bildung und Überwachung der Quotientenleistungssummenfunktion Pek(X) dienende Schaltungsanordnung und

Fig. 14 ein Radarsystem mit einer Bodenstation KMP und einem Transponder TP, in dem Transponderantworten bei über Seitenzipfel von der Bodenstation KMP ausgestrahlten Abfragesignalen unterdrückbar sind.

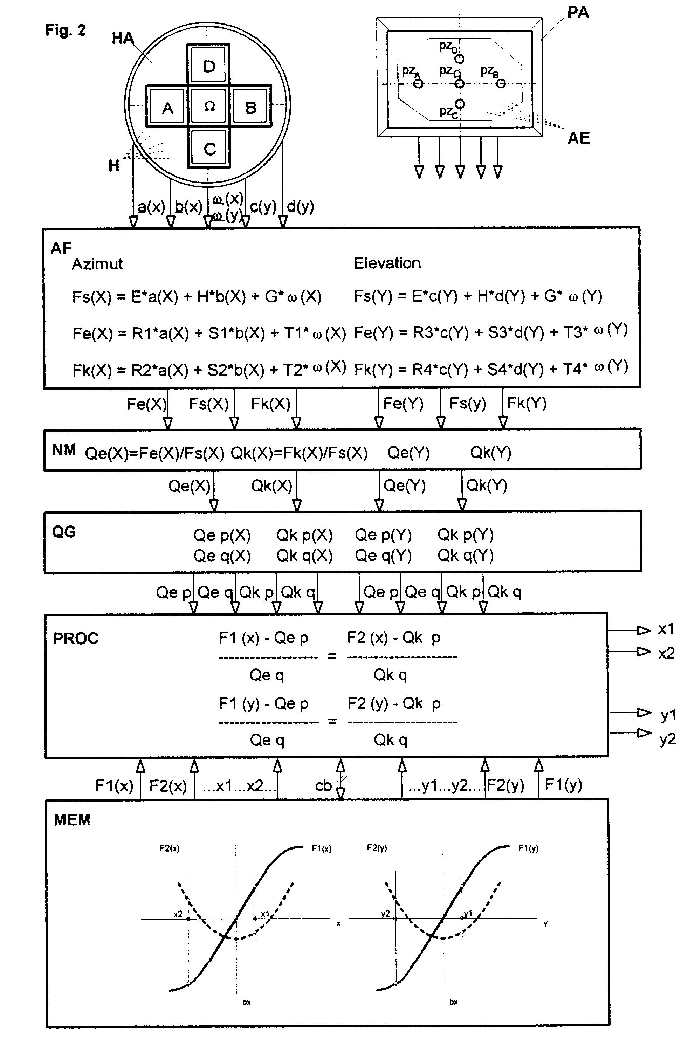

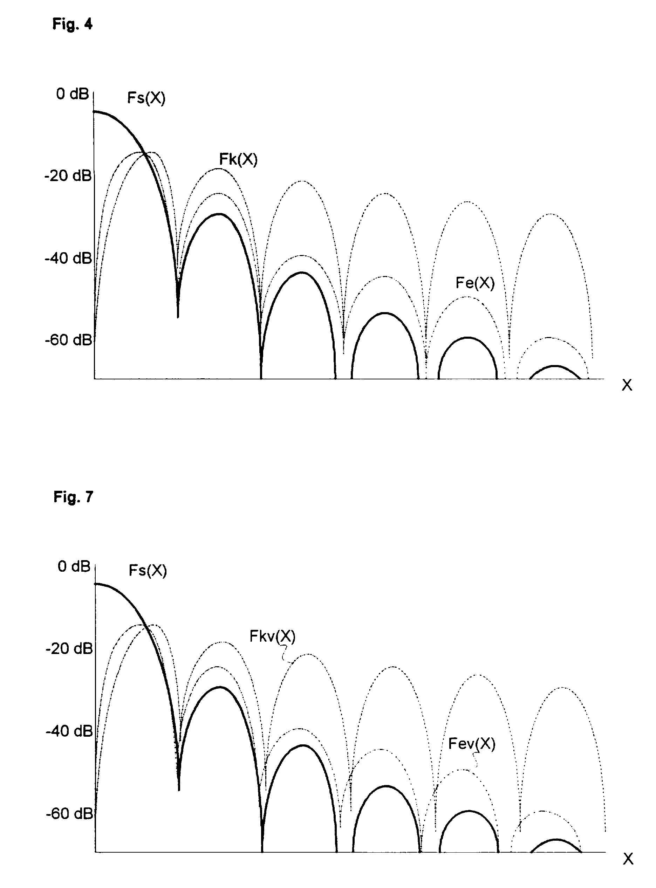

Fig. 2 zeigt das Blockschaltbild eines in [5] beschriebenen Radarsystems, bei dem zur Zielvermessung pro Messachse drei Antennenfunktionen, nämlich eine Neigungsfunktion Fe(X), eine Kurvaturfunktion Fk(X) sowie eine Summenfunktion Fs(X), vorgesehen sind (X ist der Zielablagewinkel). Die genannten Antennenfunktionen Fe(X), Fk(X) und Fs(X) entstehen bekanntlich durch Fouriertransformation der zugehörigen Beleuchtungsfunktionen Je(Lx), Jk(Lx) und Js(Lx), die in Fig. 3 dargestellt sind. Die Funktionen Fe(X) und Je(Lx), Fk(X) und Jk(Lx) sowie Fs(X) und Js(Lx) sind Fouriertransformationspaare. Lx ist dabei die normierte Lage auf der Apertur der Antenne: Lx = $2\pi * $ lx $/ \lambda$. Die Normierung der tatsächlichen Lage lx auf der Apertur der Antenne erfolgt durch die Wellenlänge der Radarsignale.

Beim erfindungsgemässen Verfahren werden nun die beiden Funktionen Fe(X) bezüglich Fs(X) und Fk(X) bezüglich Fs(X) so gewählt, dass sie ein sogenanntes abgeleitetes Paar bilden, solange keine Verzerrung vorliegt. Dies ist dann der Fall, wenn die zugehörigen Beleuchtungsfunktionen

$$Je(Lx) = const. *\frac{dJs(Lx)}{dLx}$$

und

$$Jk(Lx) = const. *\frac{d2Js(Lx)}{dLx^2}$$

durch einfache bzw. doppelte Ableitung der Summenbeleuchtungsfunktion Js(Lx) gebildet werden.

Eine bekannte Eigenschaft der Fouriertransformation ist, dass die Fouriertransformation der Ableitung einer Funktion das X-fache der Fouriertransformation der nicht abgeleiteten Funktion ist, wobei X die unabhängige Variable, im vorliegenden Fall die Zielrichtung ist. Bei doppelt abgeleiteten Funktionen entsteht eine quadratische Abhängigkeit von der Zielrichtung (siehe [2], Seite 338). Zudem erfolgt pro Ableitung eine 90°-Drehung bzw. eine Multiplikation mit der Imaginäreinheit j.

Die Fouriertransformation der Summenbeleuchtungsfunktion Js(Lx) sowie deren n-fache Ableitungen Je(Lx); n=1 und Jk(Lx); n=2 ergibt daher Antennenfunktionen Fe(X), Fk(X) und Fs(X), die sich voneinander um den Faktor (j∗X)$^n$ unterscheiden :
Qe(X) = Fe(X) / Fs(X) = const. *j * X     (n = 1) bzw.
Qk(X) = Fk(X) / Fs(X) = const. * (-X$^2$)     (n = 2)

Die Quotientenfunktionen Qe(X) bzw. Qk(X) eines abgeleiteten Paars sind damit linear bzw. quadratisch von der Zielrichtung X abhängig. Im Einziel-Fall erlauben also beide obigen, aus abgeleiteten Funktionspaaren gebildeten Quotientenfunktionen die Zielrichtungen X aus den Funktionen selbst zu ermitteln:
X = FE(X) / (const.*j)     bzw.
X$^2$ = FK(X) / (-const.)

Da die Verläufe der Funktionen Qe(X) und Qk(X) grundsätzlich auch für grosse Zielablagewinkel X im Bereich der Seitenzipfel gelten, lässt sich durch Vergleich der Leistung von Qe(X) oder von Qk(X) mit einem geeignet gewählten Schwellwert feststellen, ob das Ziel innerhalb oder ausserhalb der Hauptantennenkeule liegt. Dies trifft jedoch nur dann zu, wenn die zwischen den Seitenzipfel des An-tennendiagramms auftretenden Nullstellen beider zur Quotientenbildung verwendeten Funktionen Fe(X) und Fs(X) bzw. Fk(X) und Fs(X) genau übereinstimmen. Wenn die Funktionspaare mathematisch exakt abgeleitete sind, so trifft dies auch tatsächlich zu.

Fig. 4 zeigt den idealen Verlauf der Antennenfunktionen Fs(X), Fk(X) und Fe(X) bei abgeleiteten Paaren, deren Nullstellen deckungsgleich sind.

Die aus der Summenfunktion Fs(X) und der Neigungsfunktion Fe(X) gebildete Quotientenfunktion Qe(X)=Fe(X)/Fs(X) weist den Verlauf der in Fig. 5 gezeigten strichpunktierten Geraden auf, die beim Funktionsargument X=0, das zur Lage der Boresightachse der Antenne korrespondiert, durch Null geht. Parallel zur Abszisse sind Geraden vorgesehen, die den Schwellwerten +-$\sqrt{th_e}$ entsprechen. Die Schwellwerte th$_e$ sind derart festgelegt, dass für Argumente X, die ausserhalb des Winkelbereichs der Hauptkeule der Antenne liegen, die Leistung Pe(X) der Quotientenfunktion Qe(X) betragsmässig über dem Schwellwert th$_e$ liegt. Durch einen Komparator, der die Leistung Pe(X) der Quotientenfunktion Qe(X) mit dem festgelegten Schwellwert th$_e$ vergleicht, kann daher leicht festgestellt werden, ob Signale über die Hauptkeule oder über Seitenzipfel empfangen wurden.

Die aus der Summenfunktion Fs(X) und der Kurvaturfunktion Fk(X) gebildete Quotientenfunktion Qk(X)=Fk(X)/Fs(X) weist den Verlauf der in Fig. 6 gezeigten strichpunktierten Parabel auf, die beim Funktionsargument X = 0, das zur Lage der Boresightachse der Antenne korrespondiert, ein Minimum des negativen Werts aufweist. Parallel zur Abszisse ist eine Gerade vorgesehen, die einem Schwellwert -$\sqrt{th_k}$ entspricht. Der Schwellwert thk ist derart festgelegt, dass für Argumente X, die ausserhalb des Winkelbereichs der Hauptkeule der Antenne liegen, die Leistung Pk(X) der Quotientenfunktion Qk(X) betragsmässig über dem Schwellwert th$_k$ liegt. Durch einen Komparator, der die Leistung Pk(X) der Quotientenfunktion Qk(X) mit dem festgelegten Schwellwert thk vergleicht, kann daher leicht festgestellt werden, ob Signale über die Hauptkeule oder über Seitenzipfel empfangen wurden.

Die Leistungen Pe(X), Pk(X) werden durch Quadratur der Quotientenfunktionen Qe(X) und Qk(X) ermittelt.

Da Funktionsverläufe in der Praxis normalerweise vom in Fig. 4 gezeigten Ideal abweichen und deren Nullstellen daher meist nicht bei derselben Zielrichtung auftreten, wäre Entscheidung nach einem der oben beschriebenen Verfahren nicht zuverlässig genug. Der Verlauf der Quotientenfunktion Qe(X) entspricht in Wirklichkeit nur annähernd einer Geraden. Der Verlauf der Quotientenfunktion Qk(X) entspricht in Wirklichkeit nur annähernd einer Parabel. Im Nullstellenbereich der Funktionen Fe(X), Fk(X) können die Quotientenfunktion Qe(X), Qk(X) daher erhebliche Abweichungen vom Idealverlauf oder gar Nullstellen und Pole aufweisen.

Erfindungsgemäss wird eine Verbesserung des Verfahrens erzielt, indem die Leistungen Pe(X), Pk(X) der Quotientenfunktionen Qe(X), Qk(X) mit Faktoren r1, r2 gewichtet, addiert und erst dann mit einem Schwellwert verglichen werden. Durch die derart gebildete Quotientenleistungssummenfunktion Pek(X) = r1 * Pe(X) + r2 * Pk(X) wird die Detektion von über die Seitenzipfel empfangenen Signalen auch dann zuverlässig gewährleistet, wenn die Neigungs- oder die Kurvaturfunktion Fe(X) bzw. Fk(X) eine Nullstelle aufweist, die gegenüber der betreffenden Nullstelle der Summenfunktion Fs(X) verschoben ist, wodurch die betreffende Quotientenfunktion Qe(X) bzw. Qk(X) auch ausserhalb des Bereichs der Hauptkeule den Funktionswert Null annehmen kann. Sofern die beiden Nullstellen der Quotientenfunktionen Qe(X), Qk(X) nicht bei derselben Zielrichtung auftreten, bleibt gewährleistet, dass der vorgesehene Schwellwert für Zielrichtungen und Argumente X, die ausserhalb der Hauptkeule der Antenne liegen, nicht unterschritten wird.

Fig. 8 zeigt die logarithmische Darstellung der idealen Verläufe der Quotientenleistungsfunktionen Pe(X), Pk(X) und der Quotientenleistungssummenfunktion Pek(X), die keine Nullstellen aufweist. Wie oben erwähnt, können unerwünschte Nullstellen der Quotientenleistungssummenfunktion Pek(X) auftreten, falls die Nullstellen der Neigungs- und der Kurvaturfunktion Fe(X), Fk(X) deckungsgleich sind und von der entsprechenden Nullstelle der Summenfunktion Fs(X) abweichen.

Da in vielen Fällen nicht nur eine hohe Wahrscheinlichkeit, sondern Sicherheit dahingehend gefordert ist, dass der Verlauf der Quotientensummenfunktion Qek(X) keine grösseren Abweichungen oder gar Nullstellen aufweist, wird erfindungsgemäss eine Verschiebung der Nullstellen der Neigungs- und der Kurvaturfunktion Fe(X), Fk(X) derart vorgenommen, dass die Nullstellen der Neigungs- und der Kurvaturfunktion Fe(X), Fk(X) nicht mehr exakt beim selben Zielwinkel auftreten.

Vorzugsweise wird vorgesehen, dass die Nullstellen der einen Funktion Fe(X) bzw. Fk(X) zu tieferen und die Nullstellen der anderen Funktion Fk(X) bzw. Fe(X) zu höheren Werten als die Nullstellen der Summenfunktion Fs(X) verschoben werden, wodurch z. B. eine komprimierte Neigungsfunktion Fev(X) und eine gedehnte Kurvaturfunktion Fkv(X) entsteht (siehe Fig. 7).

Die Verschiebung der Nullstellen erfolgt z.B. am einfachsten bei der Berechnung des Antennendesigns, indem eine geringe lineare Verzerrung in der Abszisse Lx der abgeleiteten Beleuchtungsfunktionen Je(Lx) und Jk(Lx) vorgesehen wird, wodurch geänderte Beleuchtungsfunktionen Jve(Lx) = Je(Lx (1+ve)) bzw.

Jvk(Lx) = Jk(Lx (1-vk)) entstehen. Die Verschiebungsfaktoren ve und vk, die normalerweise gleich sind, werden entsprechend klein gewählt. Damit wird auch die Abszisse X der Funktionen Fe(X) und Fk(X) ein wenig verzerrt, was die gewünschte Verschiebung der Nullstellen zur Folge hat. Die Summenbeleuchtungsfunktion Js(Lx) bleibt demgegenüber unverändert.

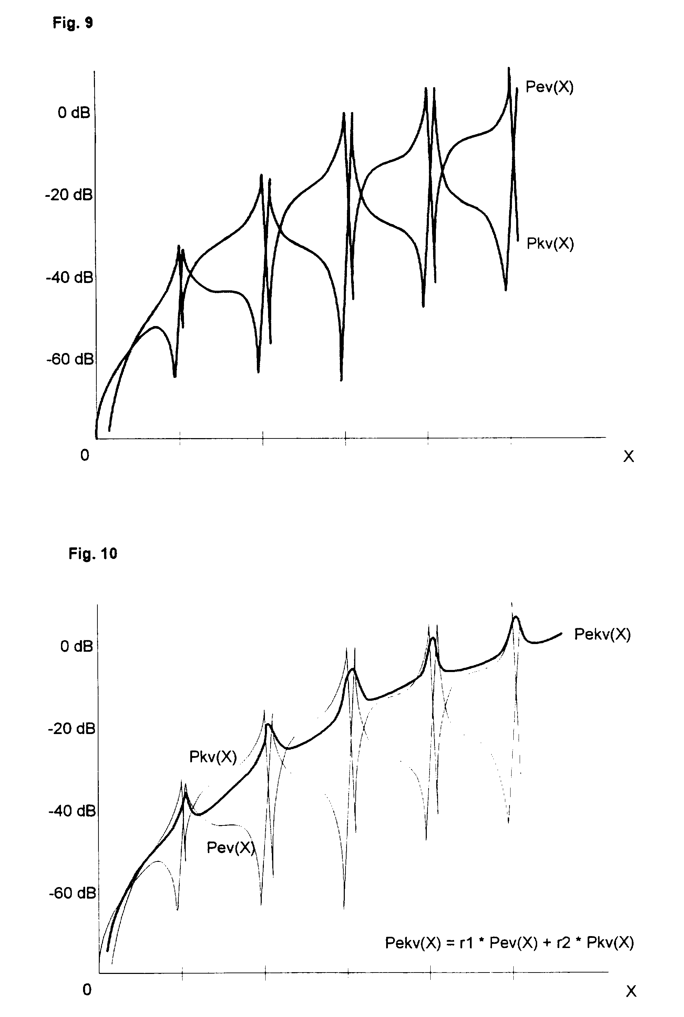

Die Verläufe der Quotientenleistungsfunktionen Pev(X) und Pkv(X) sind in Fig. 9 dargestellt. Offensichtlich sind nun die einzelnen Quotientenleistungsfunktionen Pev(X) und Pkv(X) wegen den auftretenden Einbrüchen im Funktionsverlauf für einen Vergleich mit einem Schwellwert nicht mehr geeignet.

Die durch Addition der Leistungen Pev(X), Pkv(X) der Quotientenfunktionen Qev(X) und Qkv(X) gebildete Quotientenleistungssummenfunktion Pekv(X) = r1 * Pev(X) + r2 * Pkv(X) weist demgegenüber keine Nullstellen oder nach unten verlaufende Ausschläge mehr auf, welche den festgelegten Schwellwert unterschreiten könnten (siehe Fig. 10). Ausschläge, die zwischen den Nullstellen der Funktionen Fev(X), Fkv(X) auftreten, verlaufen nach oben über dem vorgesehenen Schwellwert und sind unkritisch, da sie ausserhalb der Hauptkeule der Antenne liegen. Die Positionen an denen positive Spitzen im Verlauf der Quotientenleistungssummenfunktion Pekv(X) auftreten, liegen daher bereits im Bereich der Seitenzipfel, innerhalb dem der Schwellwert ohnehin überschritten ist. Das erfindungsgemässe Verfahren erfüllt damit all Anforderungen an ein zuverlässiges SLS-Verfahren.

Das oben beschriebene Verfahren ist vorzugsweise für Radarsysteme gemäss [5] (siehe Fig. 2) anwendbar, und generell für Systeme mit drei Funktionen pro Messachse geeignet.

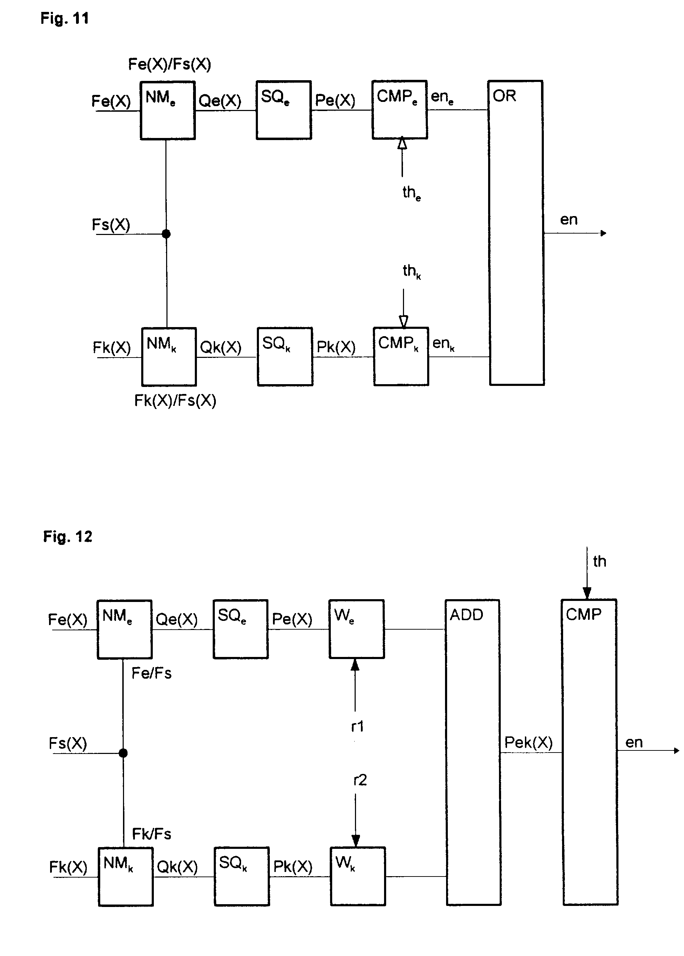

Fig. 11 zeigt eine zur Durchführung des SLS-Verfahrens geeignete Schaltungsanordnung für das aus [5] bekannte Monopulsradargerät, in dem die empfangenen Signale entsprechend den für jede Messachse vorgesehenen Antennenfunktionen Fe(X), Fk(X), Fs(X) verarbeitet und an eine Divisionsstufe $NM_e$ bzw. NMk weitergeleitet werden. In der Divisionsstufe $NM_e$ bzw. $NM_k$ werden die Signale der ersten beiden Antennenfunktionen Fe(X), Fk(X) durch das Signal der dritten Antennenfunktion Fs(X) geteilt, wodurch die Signale der Quotientenfunktionen Qe(X) und Qk(X) entstehen, die über Quadraturstufen $SQ_e$ bzw. $SQ_k$ je einem Komparator $CMP_e$ bzw. $CMP_k$ zugeführt werden. Die von den Quadraturstufen $SQ_e$ bzw. $SQ_k$ abgegebenen Leistungen Pe(X) und Pk(X) der Signale der Quotientenfunktionen Qe(X) und Qk(X) werden in den Komparatoren $CMP_e$ bzw. $CMP_k$ mit Schwellwerten $th_e$ bzw. $th_k$ verglichen. Durch die logischen Signale $en_e$ und enk, die vom Ausgang der Komparatoren $CMP_e$ bzw. $CMP_k$ einer Logikschaltung OR zugeführt werden, wird angezeigt, ob die Signalleistung Pe(X) bzw. Pk(X) den Schwellwert $th_e$ bzw. $th_k$ überschreitet. Sofern eine der Signalleistungen Pe(X) bzw. Pk(X) den Schwellwert $th_e$ bzw. $th_k$ überschreitet, wird dies durch das von der Logikschaltung OR abgegebene logische Signal en angezeigt, anhand dem über die Seitenzipfel sl empfangene Signale daher unterdrückt werden können.

In gleicher Weise erfolgt die Verarbeitung der Signale der Antennenfunktionen Fev(X), Fkv(X), die bei verzerrten (gestauchten oder gedehnten) Beleuchtungsfunktionen Jev(Lx), Jkv(Lx) entstehen.

In der in Fig. 12 gezeigten vorzugsweisen Ausgestaltung werden die von den Quadraturstufen $SQ_e$ bzw. $SQ_k$ abgegebenen Leistungen Pe(X) und Pk(X) in Stufen $W_e$ bzw. $W_k$ unter Berücksichtigung von Gewichtungsfaktoren r1, r2 gewichtet und anschliessend einer Additionsstufe ADD zugeführt, in der aus den gewichteten Leistungen Pe(X) und Pk(X) (analog für Pev(X) und Pkv(X) bei verzerrten Antennenfunktionen) die Quotientenleistungssummenfunktion Pek(X) (bzw. Pekv(X)) gebildet wird. Die Signale der Quotientenleistungssummenfunktion Pek(X) bzw. Pekv(X) werden im Komparator CMP mit einem Schwellwert th verglichen. In Abhängigkeit davon wird durch den Komparator CMP ein logisches Signal en abgegeben, anhand dem über Seitenzipfel sl empfangene Signale unterdrückt werden können.

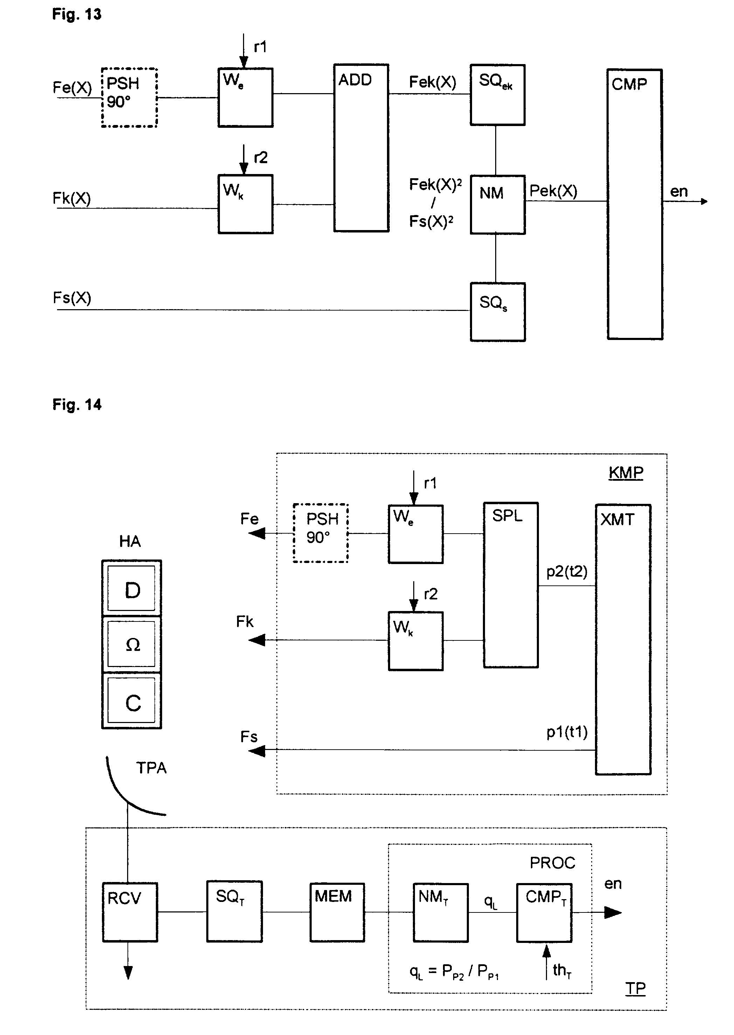

In Fig. 13 werden die um 90° gegeneinander phasenverschobenen Signale der Antennenfunktionen Fe(X), Fk(X) in Stufen $W_e$ bzw. $W_k$ unter Berücksichtigung der Gewichtungsfaktoren r1, r2 gewichtet und anschliessend in einer Additionsstufe VADD vektoriell addiert. Das Ausgangssignal der Additionsstufe VADD bzw. der Summenvektor Fek(X) wird ebenso wie das Signal der Summenfunktion Fs(X) je über eine Quadraturstufe $SQ_{ek}$ bzw. $SQ_s$ einer Divisionsstufe NM zugeführt von der die normierte Leistung Pek der Quotientenleistungssummenfunktion Pek(X) an einen Komparator CMP abgegeben wird, der die Signale der Quotientenleistungssummenfunktion Pek(X) mit einem Schwellwert vergleicht und ein davon abhängiges Steuersignal en abgibt, durch das die Verarbeitung von über Seitenzipfel sl empfangenen Signalen somit unterdrückt werden kann.

Durch die gegenseitige Phasenverschiebung der Signale der Antennenfunktionen Fe(X), Fk(X) um 90° wird sichergestellt, dass bei der vektoriellen Addition der Signale keine gegenseitigen Auslöschungen auftreten. Einbrüche des Summenvektors Fek(X) werden somit vermieden.

Die Erfindung ist nicht nur für die Unterdrückung der Auswirkung von Signalen anwendbar, die über Seitenzipfel sl der Radarantenne eines mit drei Antennenfunktionen Fe(X), Fk(X) und Fs(X) arbeitenden Radarsystems empfangen werden (RSLS). Signale, die über die Seitenzipfel sl der Radarantenne ausgesendet werden, können beim Empfang in einem Transponder erfindungsgemäss wie folgt erkannt und eine Transponderantwort als Auswirkung damit unterdrückt werden (ISLS). Zur Prüfung, ob ein Signal über die Hauptkeule oder einen Seitenzipfel abgestrahlt wurde, erfolgt wiederum ein Vergleich der Signale, die einerseits über das Summen- und andererseits über das Neigungs- und das Krümmungsdiagramm ausgestrahlt werden. Zwischen diesen im Transponder empfangenen Signalen wird wiederum ein Quotient gebildet, der mit einem Schwellwert verglichen wird. Überwiegt die Leistung des über das Summendiagramm ausgestrahlten Signals die Leistung der über das Neigungs- und das Krümmungsdiagramm ausgestrahlten Signals um ein bestimmtes Mass, wird angenommen, dass das empfangene Signal über die Hauptkeule der Radarantenne ausgestrahlt wurde. Überwiegt jedoch die Leistung des über das Neigungs- und das Krümmungsdiagramm ausgestrahlten Signals, so wird angenommen, dass das empfangene Signal über einen Seitenzipfel sl der Radarantenne ausgestrahlt wurde. In diesem Fall kann eine Transponderantwort unterdrückt werden. Die genannten Massnahmen erfolgen daher analog zu den eingangs beschriebenen erfindungsgemässen Massnahmen, durch die über Seitenzipfel sl empfangene Signale identifiziert und deren Auswirkungen unterdrückt werden. Der erfindungsgemässe Signalvergleich erfolgt im ersten Fall (Empfangsfall) intern (RSLS) und im zweiten Fall (Sendefall) extern (ISLS) im Transponder.

Damit die zu vergleichenden Signale der Summen-, Neigungs- und Krümmungsdiagramme im Transponder gewonnen werden können, sind die nachfolgend angegebenen Massnahmen vorgesehen.

Die Signale werden über das Summen-, Neigungs- und Krümmungsdiagramm in einer festgelegten Reihenfolge zeitlich verschoben ausgestrahlt. Z.B. wird zuerst ein Signal über das Summendiagramm ausgestrahlt. Anschliessend wird ein Signal über das Neigungs- und das Krümmungsdiagramm ausgestrahlt. Vorzugsweise erfolgt die Ausstrahlung über das Neigungs- und das Krümmungsdiagramm gleichzeitig. Die mit Faktoren r1, r2 gewichteten Signale werden dabei um 90° phasenverschoben über das Neigungs- und das Krümmungsdiagramm ausgestrahlt.

Fig. 14 zeigt eine Schaltungsanordnung für ein Radarsystem, das eine zur Abstrahlung von Radarsignalen vorgesehene Basisstation KMP und einen Transponder TP aufweist, der die Leistungen von zeitlich verschoben über das Summendiagramm bzw. das Neigungs- und Krümmungsdiagramm abgestrahlten Signalen vergleicht und in Abhängigkeit davon eine Transponderantwort aussendet. Die Basisstation weist eine Sendestufe XMT auf, von der zu einem Zeitpunkt t1 ein erster Puls p1 über das Summendiagramm und zu einem Zeitpunkt t2 ein zweiter Puls p2 abgebbar ist, der in einem Signalteiler SPL aufgeteilt wird. Die vom Signalteiler SPL abgegebenen Signalanteile werden je in einer Stufe $W_e$ bzw. $W_k$ gewichtet und gegebenenfalls nach einer Phasenverschiebung um 90° phasenverschoben über das Neigungs- und das Krümmungsdiagramm der Radarantenne HA abgestrahlt. Von der Antenne TPA des Transponders TP werden daher nach einer zeitlichen Verzögerung δ zum Zeitpunkt t1+ δ der erste Puls p1 und zum Zeitpunkt t2+ δ der zweite Puls p2 bzw. das Summensignal der über das Neigungs-und das Krümmungsdiagramm ausgestrahlten Signale empfangen. Durch die gegenseitige Verschiebung der über das Neigungs- und das Krümmungsdiagramm ausgestrahlten Signale um 90° werden, wie bereits erwähnt, gegenseitige Auslöschungen der Signale vermieden. Ferner ergibt die Leistung der Summe der um 90° phasenverschobenen Signale die Summe der Leistungen beider Signale (Pythagoras).

Von der Antenne TPA des Transponders TP werden die empfangenen Signale über eine Empfangsstufe RCV an eine Quadraturstufe $SQ_T$ abgegeben, von der die Werte der Leistungen $P_{p1}$, $P_{p2}$ der empfangenen Pulse p1, p2 einer Speichereinheit MEM zugeführt werden. Nachdem die Werte der Leistungen $Pp_1$, $Pp2$ von beiden Pulse p1, p2 in der Speichereinheit MEM vorliegen, wird davon in einer Divisionsstufe $NM_T$ ein Quotient $q_L = P_{p2} / P_{p1}$ gebildet, der in einem Komparator $CMP_T$ mit einem Schwellwert $th_T$ verglichen wird. Sofern der Schwellwert $th_T$ überschritten wird, wurden die empfangenen Signale über einen Seitenzipfel sl der Radarantenne HA der Bodenstation KMP ausgestrahlt. Die Funktion der Schaltungsanordnung gemäss Fig. 14 entspricht derjenigen von Fig. 13, jedoch werden die Glieder Antennenfunktion/Phasenschiebung und Gewichtung vom Signal in umgekehrter Reihenfolge durchlaufen und die vektorielle Addition der übertragenen Signale der Neigungs- und der Krümmungsfunktion Fe(X) und Fk(X) erfolgt nicht in einem Modul (VADD) sondern im Ausbreitungspfad der elektromagnetischen Welle. Ferner erfolgt eine sequentielle Übertragung der Signale der Summenfunktion Fs(X) (Zeitpunkt t1) und der Neigungs- und der Krümmungsfunktion Fe(X) und Fk(X) (Zeitpunkt t2), wie es im ISLS-Verfahren üblich ist. Möglich ist natürlich auch, die Signale der Summenfunktion Fs(X), der Neigungs- und der Krümmungsfunktion Fe(X) und Fk(X) sequentiell zu Zeitpunkten t1, t2 und t3 zu übertragen und erfindungsgemäss zu verarbeiten. Die erwähnten Unterschiede zwischen Fig. 13 und Fig. 14 bleiben ohne Einfluss auf die Gesamtfunktion der Schaltung.

Die Verwendung eines Phasenschiebers PSH (siehe Fig. 13 und Fig. 14) wird normalerweise nur bei Amplituden- und nicht bei Phasenmonopuls-Radargeräten benötigt, da dort die 90° Phasenschiebung von FE (X) als Eigenschaft der Phasenmonopuls-Antenne bereits berücksichtigt ist.

[1] M. Skolnik, Radar-Handbook, Mc Graw Hill, New York 1970

[2] S.M. Sherman, Monopulse Principles and Techniques, Artech House, Norwood 1984

[3] A.E. Acker, How to Speak Radar, Basic Fundamentals and Applications of Radar, Varian Associa-tes, Palo Alto 1988

[4] Dr. A. Schenkel, Crossfeed monopulse - a specific method to eliminate mistracking over sea, presented at the international conference "Radar-87", London, 19-21 Oktober 1987

[5] WO 97/22890

[6] Richard C. Johnson, Antenna Engineering Handbook, Mc Graw-Hill Book Company, New York 1993, dritte Auflage

[7] U.S. 4,450,448

[8] U.S. 4,672,378

## Patentansprüche

1.  Verfahren zur Unterdrückung der Auswirkung von Signalen, die über Seitenzipfel sl einer Antenne (PA; HA) eines Amplituden- oder Phasen-Monopulsradargerätes empfangen bzw. gesendet werden, bei dem zur Lagevermessung von Zielen (T1, T2) für jede Messachse drei Beleuchtungsfunktionen Je(Lx), Jk(Lx) bzw. Jev(Lx); Jkv(Lx) und Js(Lx) für die Antenne (PA; HA), sowie daraus resultierende Antennenfunktionen Fe(X), Fk(X) bzw. Fev(X), Fkv(X) und Fs(X) vorgesehen sind, **dadurch gekennzeichnet, dass** zwischen den über die erste und/oder die zweite Antennenfunktion Fe(X); Fk(X) bzw. Fev(X), Fkv(X) empfangenen bzw. gesendeten Signalen bzw. Signalleistungen und dem über die dritte Antennenfunktion Fs(X) empfangenen bzw. gesendeten Signal bzw. seiner Signalleistung ein Quotient gebildet wird, durch dessen Vergleich mit einem Schwellwert $th_e$, $th_k$, th bzw. $th_T$ festgestellt wird, ob die genannten Signale über einen Seitenzipfel sl der Antenne (PA; HA) empfangen oder gesendet wurden.

2.  Verfahren nach Anspruch 1, **dadurch gekennzeichnet, dass** durch Normierung der ersten und der zweiten Antennenfunktion Fe(X); Fk(X) bzw. Fev(X), Fkv(X) mit der dritten Antennenfunktion Fs(X) Quotientenfunktionen Qe(X)=Fe(X)/Fs(X) und/oder Qk(X)=Fk(X)/Fs(X) bzw. Qev(X)=Fev(X)/Fs(X) und/oder Qkv(X)=Fkv(X)/Fs(X) gebildet werden, deren Signalleistungen einzeln Pe(X), Pk(X) bzw. Pev(X), Pkv(X) oder gegebenenfalls mit Faktoren r1, r2 gewichtet und summiert Pek(X)=r1*Pe(X)+r2*Pk(X) bzw. Pekv(X)=r1*Pev(X)+r2*Pkv(X) mit wenigstens einem Schwellwert $th_e$, $th_k$ bzw. th verglichen werden,
    oder dass
    durch Normierung der Leistungen $Fek(X)^2$ bzw. $Fekv(X)^2$ der gegebenenfalls mit Faktoren r1, r2 gewichteten und vektoriell addierten Signale der ersten und der zweiten Antennenfunktion Fe(X); Fk(X) bzw. Fev(X), Fkv(X) mit der Leistung $Fs(X)^2$ der Signale der dritten Antennenfunktion Fs(X) eine Quotientenleistungsfunktion $Pek(X)=(Fe(X)^2+Fk(X)^2)/Fs(X)^2$ bzw. $Pekv(X)=(Fev(X)^2+Fkv(X)^2)/Fs(X)^2$ gebildet wird, deren Werte mit einem Schwellwert th verglichen werden, und/oder dass
    mittels der ersten und/oder der zweiten Antennenfunktion Fe(X); Fk(X) übertragene erste Sendesignale p2 zeitlich getrennt von mittels der dritten Antennenfunktion Fs(X) übertragenen zweiten Sendesignalen p1 zu einer Empfangsstation (TP) gesendet werden, in der anhand der Leistungen $P_{p2}$; $P_{p1}$ der ersten und zweiten Sendesignale p1, p2 ein Quotient $q_L = P_{p2} / P_{p}1$ gebildet und mit einem Schwellwert $th_T$ verglichen wird

und dass die Auswirkungen der empfangenen Signale unterdrückt werden, falls der Schwellwert $th_e$, $th_k$, th bzw. $th_T$ überschritten wird.

3. Verfahren nach Anspruch 1 oder 2, **dadurch gekennzeichnet, dass** die Beleuchtungsfunktionen Js(Lx) und Je(Lx), Jk(Lx) bzw. Jev(Lx); Jkv(Lx) derart gewählt werden, dass die Nullstellen der durch Fouriertransformation aus den Beleuchtungsfunktionen Beleuchtungsfunktionen Js(Lx) und Je(Lx), Jk(Lx) bzw. Jev(Lx); Jkv(Lx) resultierenden Antennenfunktionen Fe(X), Fk(X) und Fs(X) bei zumindest annähernd derselben Zielrichtung oder dass die Nullstellen der durch Fouriertransformation aus den Beleuchtungsfunktionen Js(Lx) Jev(Lx); Jkv (Lx) resultierenden Antennenfunktionen Fev(X), Fkv(X) und Fs(X) nicht bei derselben Zielrichtung auftreten.

4. Verfahren nach Anspruch 3, **dadurch gekennzeichnet, dass** die erste Beleuchtungsfunktion Je (Lx) als erste Ableitung und die zweite Beleuchtungsfunktion Jk(Lx) als zweite Ableitung der dritten Beleuchtungsfunktion Js(Lx) gewählt wird, wonach im Design eine Verschiebung der Nullstellen der ersten und der zweiten Beleuchtungsfunktion von Je (Lx) nach Jev(Lx) bzw. von Jk(Lx) nach Jkv(Lx) durch eine lineare Verzerrung in der die Funktionsargumente (Lx) darstellenden Abszisse derart erzeugt wird, dass der Verlauf der ersten Beleuchtungsfunktion Jev(Lx) gegenüber Je(Lx) gestreckt und der Verlauf der zweiten Beleuchtungsfunktion Jkv(Lx) gegenüber Jk(Lx) gestaucht wird oder dass der Verlauf der zweiten Beleuchtungsfunktion Jkv (Lx) gegenüber Jk(Lx) gestreckt und der Verlauf der ersten Beleuchtungsfunktion Jev(Lx) gegenüber Je (Lx) gestaucht wird, wonach die Nullstellen der ersten und zweiten Antennenfunktion Fev(X); Fkv(X) bei tieferen bzw. bei höheren Werten als die entsprechenden Nullstellen der dritten Antennenfunktion Fs(X) liegen.

5. Verfahren nach einem der vorhergehenden Ansprüche, **dadurch gekennzeichnet, dass** zwischen den zu summierenden Signalen der ersten und der zweiten Antennenfunktion Fe(X); Fk(X) bzw. Fev (X); Fkv(X) vor der Summierung im Empfangsfall oder gegenseitigen Überlagerung im Sendefall eine gegenseitige Phasenverschiebung von ±90° hergestellt wird.

6. Verfahren nach einem der vorhergehenden Ansprüche, **dadurch gekennzeichnet, dass** die Antennenfunktionen Fs(X) und Fe(X), Fk(X) bzw. Fev(X), Fkv(X) zur Zielvermessung nach dem Kurvaturverfahren verwendet werden, wobei die erste Antennenfunktion Fe(X) bzw. Fev(X) eine Neigungsfunktion, die zweite Antennenfunktion Fk(X) bzw. Fkv(X) ein Krümmungsfunktion und die dritte Antennenfunktion Fs(X) eine Summenfunktion ist.

7. Verfahren nach einem der vorhergehenden Ansprüche, **dadurch gekennzeichnet, dass** der Schwellwert $th_T$, th, $th_e$ bzw. thk derart gewählt wird, dass die Auswirkung von von ausserhalb der Hauptkeule empfangenen Signalen unterdrückt werden.

8. Amplituden- oder Phasen-Monopulsradargerät zur Durchführung des Verfahrens nach einem der Ansprüche 1-7 mit einer Antenne (PA; HA), bei der für jede Messachse drei Beleuchtungsfunktionen Je (Lx), Jk(Lx) bzw. Jev(Lx), Jkv(Lx) und Js(Lx) sowie daraus resultierende Antennenfunktionen Fe(X), Fk(X) bzw. Fev(X), Fkv(X) und Fs(X) vorgesehen sind, **dadurch gekennzeichnet, dass** die über die erste und/oder die zweite Antennenfunktion Fe(X); Fk(X) bzw. Fev(X), Fkv(X) empfangenen bzw. gesendeten Signale bzw. Signalleistungen in einer Divisionsstufe ($NM_e$, $NM_k$; NM) mit den über die dritte Antennenfunktion Fs(X) empfangenen bzw. gesendeten Signalen bzw. Signalleistungen vergleichbar sind, dass das von der Divisionsstufe ($NM_e$, $NM_k$; NM) abgegebene Signal direkt, über eine Quadraturstufe ($SQ_e$, $SQ_k$), eine Gewichtungsstufe ($W_e$, $W_k$) und eine Additionsstufe (ADD) einem Komparator ($CMP_e$, $CMP_k$ CMP; CMPT) zuführbar ist, der das zugeführte Signal mit einem Schwellwert $th_e$, $th_k$, th bzw. $th_T$ vergleicht und ein davon abhängiges Steuersignal en bzw. $en_e$, $en_k$ abgibt, durch das die Auswirkung von über Seitenzipfel sl empfangenen oder gesendeten Signalen bei Überschreitung des Schwellwerts $th_e$, $th_k$, th bzw. $th_T$ unterdrückbar ist.

9. Amplituden- oder Phasen-Monopulsradargerät nach Anspruch 8, **dadurch gekennzeichnet, dass** die Signale der ersten und/oder der zweiten Antennenfunktion Fe(X); Fk(X) bzw. Fev(X); Fkv(X) in einer Divisionsstufe ($NM_e$; $NM_k$) durch die Signale der dritten Antennenfunktion Fs(X) teilbar sind, dass die resultierenden Quotienten Qe(X); Qk(X) bzw. Qev(X); Qkv(X) über je eine Quadraturstufe ($SQ_e$, $SQ_k$) einem Komparator ($CMP_e$, $CMP_k$) zuführbar sind, in dem sie mit den Schwellwerten $th_e$ bzw. $th_k$ vergleichbar sind.

10. Amplituden- oder Phasen-Monopulsradargerät nach Anspruch 8, **dadurch gekennzeichnet, dass** die Signale der ersten und/oder der zweiten Antennenfunktion Fe(X); Fk(X) bzw. Fev(X); Fkv(X) in ei-

ner Divisionsstufe ($NM_e$; $NM_k$) durch die Signale der dritten Antennenfunktion Fs(X) teilbar sind, dass die resultierenden Quotienten Qe(X); Qk(X) bzw. Qev(X); Qkv(X) über je eine Quadraturstufe ($SQ_e$, $SQ_k$) und je eine Gewichtungsstufe ($W_e$, $W_k$) einer Additionsstufe (ADD) zuführbar sind, die mit einem Komparator (CMP) verbunden ist, in dem die zugeführten Signale Pek(X) bzw. Pekv(X) mit dem Schwellwert th vergleichbar sind.

11. Amplituden- oder Phasen-Monopulsradargerät nach Anspruch 8, **dadurch gekennzeichnet, dass** die Signale der ersten und der zweiten Antennenfunktion Fe(X); Fk(X) bzw. Fev(X); Fkv(X) über je eine Gewichtungsstufe ($W_e$, $W_k$) und eine Additionsstufe (VADD) summiert einer ersten Quadraturstufe ($SQ_{ek}$) zuführbar sind, dass die Signale der dritten Antennenfunktion Fs(X) einer zweiten Quadraturstufe ($SQ_s$) zuführbar sind; dass die Ausgangssignale der ersten Quadraturstufe ($SQ_{ek}$) in einer Divisionsstufe (NM) durch die die Ausgangssignale der zweiten Quadraturstufe ($SQ_s$) teilbar sind und dass der resultierende Quotient Pek(X); Pekv(X) in einem Komparator (CMP) mit dem Schwellwert th vergleichbar ist.

12. Radarsystem mit einem Amplituden- oder Phasen-Monopulsradargerät nach einem der Ansprüche 8-11 sowie mit einer Empfangsstation (TP), **dadurch gekennzeichnet, dass** das Amplituden- oder Phasen-Monopulsradargerät eine Sendestufe (XMT) aufweist, die zur zeitlich verschobenen Abgabe von ersten und zweiten Sendesignalen p1, p2 an die Antenne (PA; HA) dient, wobei die zweiten Signale p2 mittels der ersten und/oder der zweiten Antennenfunktion Fe(X); Fk(X) und die ersten Signale p1 mittels der dritten Antennenfunktion Fs(X) zu einer Empfangsstation (TP) übertragbar sind, in der, gegebenenfalls nach Zwischenspeicherung in einem Speichermodul (MEM), in einer Divisionsstufe (PROC, NM) anhand der Leistungen $P_{p2}$; $P_{p1}$ der ersten und zweiten Sendesignale p1, p2 ein Quotient $q_L = P_{p2}/P_{p1}$ gebildet wird, der in einem Komparator (PROC, $CMP_T$) mit dem Schwellwert $th_T$ vergleichbar ist.

13. Amplituden- oder Phasen-Monopulsradargerät nach einem der Ansprüche 8-12, **dadurch gekennzeichnet, dass** die Beleuchtungsfunktionen Je(Lx), Jk(Lx) bzw. Jev(Lx), Jkv(Lx) und Js(Lx) derart gewählt sind, dass die Nullstellen der durch Fouriertransformation aus den Beleuchtungsfunktionen Beleuchtungsfunktionen Je(Lx), Jk(Lx) bzw. Jev(Lx), Jkv(Lx) und Js(Lx) resultierenden Antennenfunktionen Fe(X), Fk(X) und Fs(X) bei zumindest annähernd derselben Zielrichtung oder dass die Nullstellen der durch Fouriertransformation aus den Beleuchtungsfunktionen Jev(Lx), Jkv(Lx) und Js(Lx) resultierenden Antennenfunktionen Fev(X), Fkv(X) und Fs(X) nicht bei derselben Zielrichtung auftreten.

**Fig. 1**

**Fig. 3**

**Fig. 2**

HA

D

A    Ω    B

C

H

PA

pz_D

pz_A    pz_Ω    pz_B

pz_C

AE

a(x)   b(x)   $\omega(x)$   c(y)   d(y)
              $\omega(y)$

**AF**

Azimut                                    Elevation

Fs(X) = E*a(X) + H*b(X) + G* ω (X)      Fs(Y) = E*c(Y) + H*d(Y) + G* ω (Y)

Fe(X) = R1*a(X) + S1*b(X) + T1* ω (X)   Fe(Y) = R3*c(Y) + S3*d(Y) + T3* ω (Y)

Fk(X) = R2*a(X) + S2*b(X) + T2* ω (X)   Fk(Y) = R4*c(Y) + S4*d(Y) + T4* ω (Y)

Fe(X)   Fs(X)   Fk(X)          Fe(Y)   Fs(y)   Fk(Y)

**NM**  Qe(X)=Fe(X)/Fs(X)  Qk(X)=Fk(X)/Fs(X)    Qe(Y)      Qk(Y)

Qe(X)   Qk(X)          Qe(Y)   Qk(Y)

**QG**

Qe p(X)   Qk p(X)   Qe p(Y)   Qk p(Y)
Qe q(X)   Qk q(X)   Qe q(Y)   Qk q(Y)

Qe p  Qe q  Qk p  Qk q        Qe p  Qe q  Qk p  Qk q

**PROC**

$$\frac{F1(x) - Qe\ p}{Qe\ q} = \frac{F2(x) - Qk\ p}{Qk\ q}$$

$$\frac{F1(y) - Qe\ p}{Qe\ q} = \frac{F2(y) - Qk\ p}{Qk\ q}$$

→ x1
→ x2

→ y1
→ y2

F1(x)   F2(x)   ...x1...x2...   cb   ...y1...y2...   F2(y)   F1(y)

**MEM**

F2(x)          F1(x)       F2(y)          F1(y)

x2        x1        x              y2        y1        Y

bx                             bx

**Fig. 4**

**Fig. 7**

**Fig. 5**

$$Qe(X) = \frac{Fe(X)}{Fs(X)} = \text{const.} * X$$

Fe(X)

$+\sqrt{th_e}$

X

$-\sqrt{th_e}$

X = 0

**Fig. 6**

Fk(X)

X

$-\sqrt{th_k}$

$$Qk(X) = \frac{Fk(X)}{Fs(X)} = \text{const.} * X^2$$

X = 0

**Fig. 8**

0 dB — Pk(X)

Pek(X)

Pe(X)

-20 dB

th

-40 dB

-60 dB

$$Pek(X) = r1 * Pe(X) + r2 * Pk(X)$$

0 — X

**Fig. 9**

**Fig. 10**

$$Pekv(X) = r1 * Pev(X) + r2 * Pkv(X)$$

**Fig. 11**

Fe(X)/Fs(X)

Fe(X) — NM$_e$ — Qe(X) — SQ$_e$ — Pe(X) — CMP$_e$ — en$_e$ — OR — en →

th$_e$

Fs(X) —●

th$_k$

Fk(X) — NM$_k$ — Qk(X) — SQ$_k$ — Pk(X) — CMP$_k$ — en$_k$

Fk(X)/Fs(X)

**Fig. 12**

th

Fe(X) — NM$_e$ — Qe(X) — SQ$_e$ — Pe(X) — W$_e$ — ADD — Pek(X) — CMP — en →

Fe/Fs

Fs(X) —●

r1

Fk/Fs

r2

Fk(X) — NM$_k$ — Qk(X) — SQ$_k$ — Pk(X) — W$_k$

**Fig. 13**

**Fig. 14**